# EUROPÄISCHE PATENTSCHRIFT

(11) **EP 2 295 216 B1**
(45) Veröffentlichungstag und Bekanntmachung des Hinweises auf die Patenterteilung: **06.01.2016**
(21) Anmeldenummer: 09011755.7
(22) Anmeldetag: 15.09.2009
(51) Int. Cl.: B29L 31/60, B28B 1/00, B29D 99/00, B29D 24/00

(54) **Verfahren zur Herstellung einer Wabenstruktur aus einem Faserhalbzeug**
Method for producing a honeycomb structure from a semi-finished fibre product
Procédé de fabrication d'une structure en nid d'abeille à partir d'un demi-produit en fibres

(43) Veröffentlichungstag der Anmeldung: 16.03.2011
(73) Patentinhaber: INVENT Innovative Verbundwerkstoffe Realisation und Vermarktung neuer Technologien GmbH, 38112 Braunschweig (DE)
(72) Erfinder: Tschepe, Christoph, 38118 Braunschweig (DE); Linke, Stefan, 38118 Braunschweig (DE); Schöppinger, Carsten, 38259 Salzgitter (DE); Schmitz, Holger, 38102 Braunschweig (DE); Wichmann, Henning, 38120 Braunschweig (DE)
(74) Vertreter: Holz, Christian

(56) Entgegenhaltungen:
- EP-A1- 2 006 010
- EP-A2- 0 459 223
- FR-A1- 2 926 614

## Beschreibung

Die Erfindung betrifft ein Verfahren zum Herstellen einer Wabenstruktur aus einem Faserhalbzeug, vorzugsweise aus vorimprägnierten Kohlefasern.

Solche Wabenstrukturen werden in unterschiedlichen Bereichen der Technik, beispielsweise in der Raumfahrttechnik, eingesetzt, um Bauteile oder auch Platten herzustellen, wobei die Wabenstruktur den Kern bildet. Die Vorteile liegen dabei vor allem in dem geringen spezifischen Gewicht von ca. 30 kg/m³ sowie in der minimalen Wärmedehnung und einer hohen Steifigkeit. In der Regel werden solche Wabenstrukturen auf Kundenwunsch entsprechend den individuellen Anforderungen hergestellt.

Es sind ferner auch bereits Wabenstrukturen aus Aluminium bekannt, die ebenfalls mit Deckschichten aus Kohlefaser zu Formteilen verarbeitet werden können. Diese haben den Vorteil, dass sie kostengünstig hergestellt werden können, indem nämlich mehrere Lagen Aluminiumfolien aufeinandergelegt werden und zwischen den Lagen ein Kleber streifen- bzw. bahnförmig eingebracht wird. Nach dem Verkleben werden die Lagen auseinandergezogen und bilden dann die gewünschte Wabenstruktur. Für Anwendungen, bei denen es auf eine minimale Wärmedehnung und hohe Steifigkeiten ankommt, sind solche Aluminiumwaben nicht geeignet.

Die Druckschrift EP 0 459 223 A2 zeigt ein Verfahren zum Herstellen einer Wabenstruktur, bei dem senkrecht zur Längsachse der Waben großflächige Wabenstrukturen erzeugt werden. Dabei wird die Wabenstruktur hergestellt, indem einzelne Lagen von gewelltem, thermoplastischem Gewebe auf einen aus einer Wabenstruktur bestehenden Block aufgelegt und mit diesem Block durch Zufuhr von Wärme zu der Wabenstruktur verbunden werden.

Die Druckschrift GB 2 188 866 A zeigt ein Verfahren, bei dem zunächst auf ein Werkzeugunterteil mit Erhebungen und Senken eine Lage eines Materials, welches Verstärkungseinlagen aus Kohlefasern aufweist, aufgelegt wird. Auf diese Lage werden sechseckige Kerne aufgebracht. Anschließend werden weitere Lagen des Materials und weitere Kerne aufgelegt. Auf der letzten Lage des Materials wird ein Werkzeugoberteil mit Erhebungen und Senken angeordnet. Anschließend erfolgt die Umformung und einhergehend die Verschmelzung der einzelnen Lagen des thermoplastischen Materials in einem Ofen. Zusätzlich werden die Materiallagen mit einem Druck beaufschlagt.

Ähnliche Verfahren zum Umformen thermoplastischer Werkstoffe sind aus den Druckschriften WO 87/06186 A1, US 5,131,970 A, US 5,549,773 A und WO 94/11182 A1 bekannt.

Zur Herstellung von Wabenstrukturen mit einer geringen Höhe in der Längsachse der Waben werden die Wabenstrukturen üblicherweise zu flächigen Stücken entsprechend der gewünschten Wabentiefe weiterverarbeitet, insbesondere mittels Sägen, Schneiden, Fräsen und Schleifen.

Um senkrecht zur Längsachse der Waben großflächige Wabenstrukturen zu erzeugen, müssen entsprechend große Werkzeuge und eine entsprechend hohe Anzahl an Kernen vorgehalten werden. Da hier schnell fertigungstechnische und wirtschaftliche Grenzen erreicht sind, werden Wabenstrukturen mit einer senkrecht zur Längsachse der Waben großflächigen Ausdehnung mittels Automaten gefertigt, wie sie aus den Druckschriften EP 2 006 010 A1, EP 0 368 238 A2, US 3,356,555 A und WO 91/19611 A1 basierend auf dem Umformen von Thermoplasten bekannt sind. Diese Druckschriften beschreiben mehrere Verfahren zur Herstellung von Wabenstrukturen.

Bei einem Expansionsverfahren gemäß der Druckschrift EP 0 368 238 A2 wird von einer Rolle ablaufendes Bandmaterial, zum Beispiel Polyamidpapier, in Blätter zerteilt. Auf die Blätter wird dann in geraden, in Bandlaufrichtung verlaufenden Linien ein Kleber aufgepunktet. Die Blätter werden gestapelt, die Klebelinien gehärtet und schließlich werden die aufeinandergestapelten Papierlagen zu einem Wabenblock auseinandergezogen, von dem Platten mit der gewünschten Stärke abgeschnitten werden können. Ferner besteht die Möglichkeit, von dem Blattstapel Scheiben mit der gewünschten Stärke abzuschneiden und diese Scheiben dann zu Platten mit einer Wabenstruktur auseinanderzuziehen. Dieses Verfahren ist für die Verarbeitung von Faserverbundwerkstoffen auf Basis duroplastischer Matrixwerkstoffe nicht möglich.

Ein Verfahren zum Verkleben mehrerer Wabenkörper zu einer Wabenstruktur zeigt die Druckschrift EP 2 006 010 A1. Das dort beschriebene Herstellungsverfahren betrifft einen Wabenstrukturkörper aus einem Keramikmaterial, bei dem säulenförmige Wabenkörper geformt und gebrannt werden, um anschließend durch Verkleben zu einem Wabenblock verbunden zu werden. Ein ähnliches Verfahren ist aus der Druckschrift FR 2 926 614 A1 bekannt, bei der mehrere aus einer Wabenstruktur bestehende Blöcke zu einer Wabenstruktur verbunden werden, gemäß dem Oberbegriff des Anspruchs 1.

Weiterhin ist aus der Druckschrift EP 0 368 238 A2 ein Profilierverfahren bekannt, welches zur Herstellung von Wabenstrukturen mit größerer Festigkeit eingesetzt wird. Bei diesem Verfahren wird das von einer Rolle ablaufende Bandmaterial, das beispielsweise aus Aluminium besteht, mittels Profilrollen zum Beispiel zu einem Trapezprofilband gewalzt. Das profilierte Band wird dann in Trapezprofilplatten zerteilt und auf die Erhöhungen der Trapezprofilplatten ein Kleber aufgetragen. Die Platten werden schließlich aufeinandergestapelt und zu einem Wabenblock zusammengeklebt, von dem Paneele mit der gewünschten Stärke abgeschnitten werden.

In der EP 0 368 238 A2 wird darüber hinaus ein weiteres Verfahren beschrieben, bei dem eine Faserthermoplastverbundfolie, welche Fasern aus Kohlenstoff, Siliciumkarbid, Whisker oder dergleichen in Form von Geweben, Gelegen oder Matten enthält, und Fasern, die in einer Matrix aus einem Hochtemperaturthermoplast wie Polyetheretherketon, Polyethersulfon oder Polysulfon eingebettet sind, zu einer Wabenstruktur verarbeitet werden. Dazu wird die Faserthermoplastfolie profiliert und in Platten zerteilt, die zu einer Wabenstruktur zusammengeklebt oder durch Schmelz- oder Ultraschallschweißen zusammengeschweißt werden, wobei das aufgeheizte Thermoplastfolienband und der Faserwerkstoff durch einen Walzvorgang miteinander verbunden werden.

Aus der Druckschrift US 6,245,401 B1 ist ein Verfahren zur Herstellung großflächiger Wabenstrukturen bekannt, bei dem die einzelnen Lagen aus einem Faserhalbzeug und einem die Fasern verbindenden Matrixwerkstoff vorgefertigt und in einem ausgehärteten Zustand mittels eines Klebstoffs oder thermoplastischen Werkstoffs verklebt werden. Nachteilig bei diesen Verfahren zur Herstellung großflächiger Wabenstrukturen ist, dass neben den Fasern und dem Matrixstoff ein Klebstoff eingesetzt wird, wodurch eine inhomogene Materialstruktur erzeugt wird. Die durch den Klebstoff abweichenden Materialeigenschaften beeinträchtigen die Qualität der Wabenstruktur. Darüber hinaus ist eine Wabenstruktur, in der thermoplastische Werkstoffe verarbeitet wurden, nur bedingt resistent gegen hohe Temperaturen.

Der Erfindung liegt die Aufgabe zugrunde, eine Möglichkeit zu schaffen, offenporige, großflächige Wabenstrukturen hoher Festigkeit und Temperaturbeständigkeit aus Fasern und Matrixstoff mit einer einheitlichen Materialzusammensetzung und einheitlichen Materialeigenschaften ohne Verwendung von Klebstoffen und zugleich mit einem vergleichsweise geringen Aufwand herzustellen. Diese Aufgabe wird erfindungsgemäß mit einem Verfahren gemäß den Merkmalen des Anspruchs 1 gelöst. Die weitere Ausgestaltung der Erfindung ist den Unteransprüchen zu entnehmen.

Erfindungsgemäß ist also ein Verfahren vorgesehen, bei dem zum Verbinden mehrerer Blöcke einer Wabenstruktur ein erster Block in ein Werkzeugunterteil eingelegt und auf der dem Werkzeugunterteil gegenüberliegenden Oberfläche des ersten Blocks Kerne angeordnet werden. Anschließend wird eine Lage desselben vorimprägnierten Faserhalbzeugs auf die Oberfläche und die Kerne konturbündig aufgelegt. Danach werden auf der Lage weitere Kerne angeordnet. Dann wird auf die Lage und die zuletzt angeordneten Kerne ein weiterer oder der letzte Block aufgelegt, auf dem ein Werkzeugoberteil angeordnet wird. Abschließend wird die Lage unter Zufuhr von Wärme und Druck ausgehärtet und es werden die Blöcke mit der Lage des Faserhalbzeugs und somit auch miteinander verbunden. Durch dieses Verfahren wird es möglich, eine großflächige Wabenstruktur aus mehreren separat gefertigten Blöcken herzustellen, wobei die Wabenstruktur vollständig aus einem einheitlichen Faser- und Matrixwerkstoff gefertigt wurde. Die Zufuhr von Druck wird beispielsweise mittels Massenkörpern realisiert, die auf das Werkzeugoberteil gelegt werden und eine Druckkraft auf die Wabenstruktur ausüben.

Vorteilhaft bei diesem Verfahren ist es, dass keine Klebstoffe verwendet werden, welche grundsätzlich abweichende Materialeigenschaften aufweisen und daher die Qualität der Wabenstruktur beeinträchtigen würden. Vielmehr entsteht mit dem erfindungsgemäßen Verfahren eine Wabenstruktur ausschließlich aus Faserstrukturen, insbesondere Kohlefaserstrukturen, sodass einheitliche Materialeigenschaften sichergestellt werden.

Faserhalbzeuge sind beispielsweise Gewebe, Gelege, Multiaxialgelege, Gestricke, Geflechte der Vliese aus Kohlenstoff-, Aramid-, Glas-, oder Pechfasern oder anderen faserartigen Werkstoffen. Das Faserhalbzeug wird bei der Verarbeitung in eine duroplastische Matrix eingebettet. Hierdurch wird es möglich, dass die Strukturen der einzelnen Blöcke beim Zusammenfügen und dem damit einhergehenden erneuten Erwärmen zur Verfestigung der zwischen den Blöcken eingebrachten Lage formstabil sind. Des Weiteren ist es mittels des erfindungsgemäßen Verfahrens möglich, dass die offenporige, poröse Ausführung der Wabenstruktur, insbesondere der Wabenwände, auch im Kontaktbereich der zusammenzufügenden Blöcke erhalten bleibt. Dies ist zum Beispiel bei Wabenstrukturen, die in der Raumfahrttechnik eingesetzt werden, von wesentlicher Bedeutung.

Das Faserhalbzeug wird vor oder nach dem Auflegen in einen duroplastischen Stoff, insbesondere in ein duroplastisches Harzsystem, eingebettet. Ist das Faserhalbzeug schon vor der Verarbeitung mit einem Matrixwerkstoff ausgestattet, spricht man von sogenannten Prepregs oder vorimprägnierten Fasern bzw. Faser-Matrix-Halbzeugen.

Die Herstellung der Blöcke aus der Wabenstruktur kann einstufig oder mehrstufig durchgeführt werden. Bei der einstufigen Verfestigung wird die Wabenstruktur über eine Zeitspanne beispielsweise einer Temperatur von 160 bis 220 °C, in Abhängigkeit des Harzsystems, und einer Druckkraft ausgesetzt und anschließend auf Raumtemperatur abgekühlt und dem Werkzeug entnommen. Die Zeitspanne ist abhängig von den als Faser und Matrix verwendeten Materialien.

Vorteilhaft ist es, die Wabenstruktur bei einer mehrstufigen Härtung über eine erste Zeitspanne einer Temperatur von 80 bis 85 °C und einer Druckkraft auszusetzen und sie dann kontrolliert zum Beispiel auf Raumtemperatur abzukühlen und zu entformen. Anschließend erhält die Wabenstruktur bei einer Erwärmung über eine zweite Zeitspanne bei einer Temperatur von 160 bis 220 °C und mit oder ohne Einwirken einer Druckkraft die endgültige Festigkeit und wird abschließend erneut zum Beispiel auf Raumtemperatur abgekühlt. Bei der zweistufigen Verfestigung ist es notwendig, dass die Wabenstruktur in der zweiten Zeitspanne keiner Druckkraft ausgesetzt wird, solange sie nicht durch ein Werkzeug gestützt wird. Durch dieses Verfahren wird es möglich, die Festigkeit der Wabenstruktur, insbesondere die Temperaturbeständigkeit der Blöcke, soweit zu erhöhen, dass sie bei der Verbindung zweier oder mehrerer Blöcke einer Druckkraft und der notwendigen Härtetemperatur ausgesetzt werden können. Auf diese Weise wird es zudem möglich, die Wabenstruktur schonend für das Werkstück und das Werkzeug nach der ersten Zeitspanne zu entformen, also dem Werkzeug zu entnehmen. Zugleich ist so das Werkzeug schneller wieder einsatzbereit, wodurch eine effizientere Fertigung realisiert werden kann.

Die Verbindung der Blöcke erfolgt nach dem beschriebenen Ablauf. Die Härtung der zwischen den Blöcken eingelegten Lage erfolgt bei minimaler Härtetemperatur in Abhängigkeit von dem verwendeten Harzsystem, beispielsweise bei 80 bis 85 °C. Dabei wird die zuvor auf 160 bis 200 °C erhöhte Erweichungstemperatur der Blöcke nicht überschritten, sodass diese formstabil mit Druck beaufschlagt werden können. Diese Druckbeaufschlagung ist wiederum erforderlich, um einen gleichmäßig flächigen Kontakt zwischen der eingelegten Verbindungslage und den angrenzenden Wabenblöcken sicherzustellen.

Nach der Verfestigung der eingelegten Lage ist erneut eine angeschlossene Temperung zur Erhöhung der Temperaturbeständigkeit der eingelegten Verbindungslage notwendig, um die Anbindung weiterer Blöcke zu ermöglichen. Die Temperung erfolgt ohne Druckbeaufschlagung.

Das beschriebene Verfahren ist nicht anwendbar mit thermoplastischen Matrixwerkstoffen.

Für einen wirtschaftlichen Fertigungsablauf hat es sich darüber hinaus als günstig erwiesen, dass ein einzelner Block aus mehreren, vorzugsweise aus drei bis acht Lagen Faserhalbzeug aufgebaut wird.

Das Erwärmen erfolgt bei den aus dem Stand der Technik bekannten Verfahren durch einen Aufenthalt der Wabenstruktur in einer Wärmekammer oder einem Backofen, weitere Techniken wie Induktionserwärmung sind möglich. Gegenüber diesen bekannten Prozessen ist es vorteilhaft, dass bei der Verfestigung der Wabenstruktur die Zufuhr und insbesondere der Entzug von Wärme mittels eines durch das Werkzeugunterteil, das Werkzeugoberteil und/oder die Kerne des Werkzeugs strömenden Fluids erfolgt. Hierdurch wird es möglich, dass der Temperaturaustausch direkt erfolgt, somit besser kontrolliert werden kann und die Prozedur der Verfestigung schneller abgeschlossen ist als bei herkömmlichen Methoden. Das Fluid durchströmt dazu in den Werkzeugteilen vorgesehene Hohlräume.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine geschnittene Darstellung eines Werkzeugs bei der Anwendung eines aus dem Stand der Technik bekannten Verfahrens zur Herstellung einer Wabenstruktur mit Variation der Materialien von Thermo- auf Duroplasten.
- Fig. 2: eine geschnittene Darstellung eines Werkzeugs bei der Anwendung des erfindungsgemäßen Verfahrens zur Herstellung einer Wabenstruktur;
- Fig. 3: ein Ablaufdiagramm des erfindungsgemäßen Verfahrens.

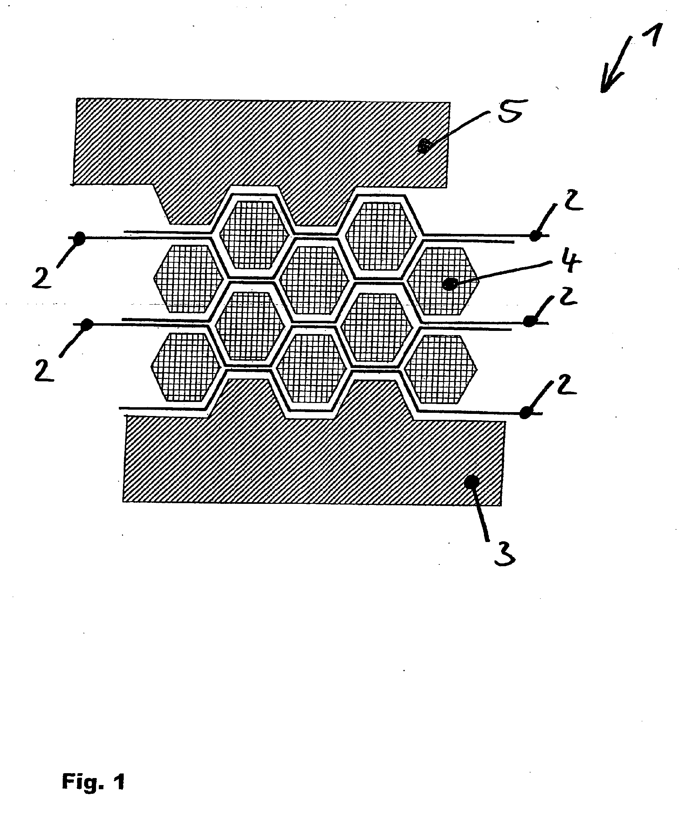

Figur 1 zeigt ein Werkzeugunterteil 3 mit Erhebungen und Senken, in das zunächst eine Lage 2 eines Materials, welches Verstärkungseinlagen aus Kohlefasern aufweist, aufgelegt wird. Auf dieser Lage 2 werden sechseckige Kerne 4 angeordnet. Anschließend werden weitere Lagen 2 des Materials und weitere Kerne 4 aufgelegt. Auf der letzten Lage 2 des Materials wird ein Werkzeugoberteil 5 mit Erhebungen und Senken angeordnet. Anschließend erfolgt die Verbindung der einzelnen Lagen 2 des Materials durch Wärmezufuhr in einem Ofen. Zusätzlich wird der Aufbau mit Druck beaufschlagt.

Nach dem Abkühlen und dem Entformen ist so eine Wabenstruktur 1 erzeugt worden, die weiter- und/oder nachbearbeitet werden kann.

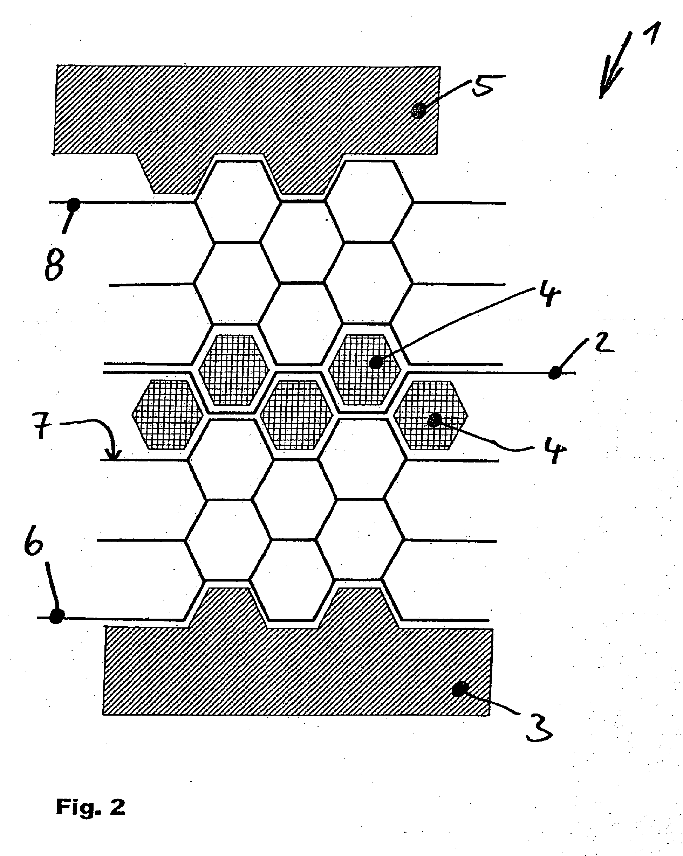

Figur 2 zeigt, wie mehrere Blöcke 6, 8 einer Wabenstruktur 1 erfindungsgemäß verbunden werden.

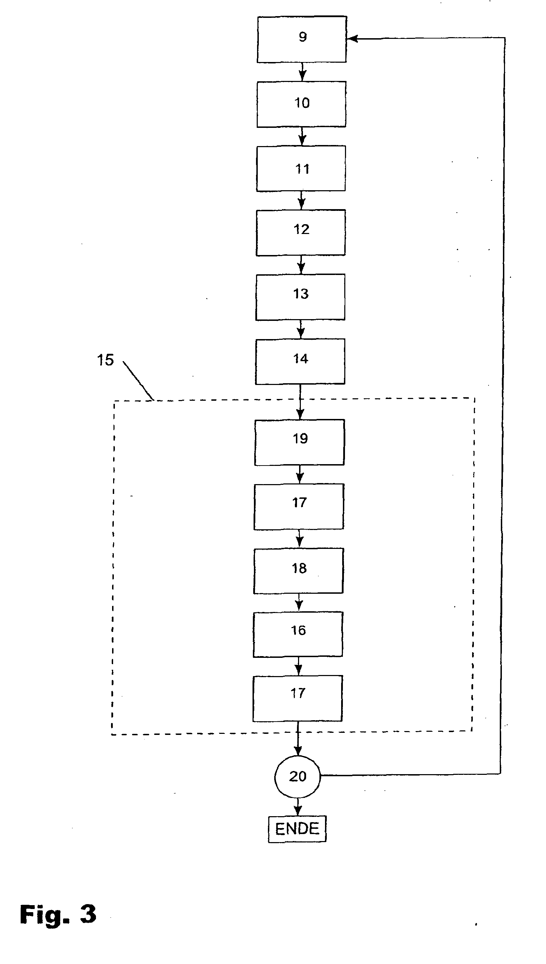

Figur 3 zeigt ein Ablaufschema, welches die einzelnen Verfahrensschritte darstellt. Erfindungsgemäß wird ein erster aus der Wabenstruktur bestehender Block in ein Werkzeugunterteil eingelegt 9 und auf der dem Werkzeugunterteil gegenüberliegenden Oberfläche des ersten Blocks werden Kerne angeordnet 10. Anschließend wird eine Lage desselben Faserhalbzeugs, aus dem die Blöcke hergestellt sind, auf die Oberfläche und die Kerne konturbündig aufgelegt 11. Danach werden auf der Lage weitere Kerne angeordnet 12. Anschließend wird auf die Lage und die zuletzt angeordneten Kerne ein weiterer oder der letzte Block aufgelegt 13. Auf diesen Block wird ein Werkzeugoberteil angeordnet 14. Abschließend werden unter Zufuhr von Wärme und Druck die Lage verfestigt und die einzelnen Blöcke mit der Lage 2 des Faserhalbzeugs verbunden.

Die Verfestigung 15 der aus mehreren Blöcken aufgebauten Wabenstruktur erfolgt mehrstufig. Die Wabenstruktur wird über eine erste Zeitspanne einer Temperatur von 80 bis 85 °C, in Abhängigkeit des verwendeten Harzsystems, und einer Druckkraft ausgesetzt 19, dann kontrolliert auf Raumtemperatur abgekühlt 17 und entformt 18. Anschließend wird die Wabenstruktur über eine zweite Zeitspanne ohne Druckeinwirkung einer Temperatur von 160 bis 220 °C ausgesetzt 16, wobei die Wabenstruktur nicht druckbelastet ist, und abschließend erneut auf Raumtemperatur abgekühlt 17.

Die auf diese Weise erzeugte großflächige Wabenstruktur aus einem einheitlichen Materialaufbau ist dann fertig zur Weiter- und/oder Nachbearbeitung oder wird wahlweise als ein Block erneut dem Verfahren zugeführt 20.

## Patentansprüche

1. Verfahren zum Herstellen einer Wabenstruktur (1) aus einem Faserhalbzeug, vorzugsweise aus Kohlefasern, wobei mehrere aus einer Wabenstruktur bestehende Blöcke (6, 8) zu der Wabenstruktur (1) verbunden werden, **dadurch gekennzeichnet, dass** ein erster Block (6) in ein Werkzeugunterteil (3) eingelegt (9) wird und auf der dem Werkzeugunterteil (3) gegenüberliegenden Oberfläche (7) des ersten Blocks (6) Kerne (4) angeordnet (10) werden, anschließend eine Lage (2) Faserhalbzeug auf die Oberfläche (7) und die Kerne (4) konturbündig aufgelegt (11) wird, danach auf der Lage (2) weitere Kerne (4) angeordnet (12) werden, dann auf die Lage (2) und die zuletzt angeordneten Kerne (4) ein weiterer Block (8) aufgelegt (13) wird, auf dem ein Werkzeugoberteil (5) angeordnet (14) wird, und abschließend unter Zufuhr von Wärme und Druck die Lage (2) verfestigt (15) wird und die einzelnen Blöcke (6,8) mit der Lage (2) des Faserhalbzeugs verbunden werden, wobei das Faserhalbzeug der Blöcke (6, 8) und der Lage (2) vor oder nach dem Auflegen (11) mit einem duroplastischen Stoff als Matrix ausgestaltet wird.

2. Verfahren nach Anspruch 1, **dadurch gekennzeichnet, dass** die Verfestigung (15) der Wabenstruktur (1), insbesondere der Wabenblöcke (6, 8), einstufig oder mehrstufig durchgeführt wird.

3. Verfahren nach Anspruch 2, **dadurch gekennzeichnet, dass** bei einer einstufigen Verfestigung (15) die Wabenstruktur (1) über eine Zeitspanne einer Temperatur von 160 bis 220 °C ausgesetzt (16) und anschließend abgekühlt (17) und entformt (18) wird.

4. Verfahren nach Anspruch 3, **dadurch gekennzeichnet, dass** bei einer mehrstufigen Verfestigung (15) die Wabenstruktur (1) über eine erste Zeitspanne einer Temperatur von 80 bis 85 °C ausgesetzt (19), dann abgekühlt (17) und entformt (18) wird und anschließend über eine zweite Zeitspanne einer Temperatur von 160 bis 220 °C ausgesetzt (16) und abschließend erneut abgekühlt (17) wird.

5. Verfahren nach zumindest einem der vorhergehenden Ansprüche, **dadurch gekennzeichnet, dass** die Verfestigung (15) einer aus mehreren Blöcken (6,8) bestehenden Wabenstruktur (1) mehrstufig durchgeführt wird.

6. Verfahren nach Anspruch 5, **dadurch gekennzeichnet, dass** bei einer mehrstufigen Verfestigung (15) die Wabenstruktur (1) über eine erste Zeitspanne einer Temperatur von 80 bis 85 °C sowie einem Druck ausgesetzt (19), dann abgekühlt (17) und entformt (18) wird und anschließend über eine zweite Zeitspanne einer Temperatur von 160 bis 220 °C ausgesetzt (16) und abschließend erneut abgekühlt (17) wird.

7. Verfahren nach zumindest einem der vorhergehenden Ansprüche, **dadurch gekennzeichnet, dass** für die Blöcke (6, 8) und die Lage (2) dasselbe Faserhalbzeug und derselbe Matrixwerkstoff verwendet werden.

8. Verfahren nach zumindest einem der vorhergehenden Ansprüche, **dadurch gekennzeichnet, dass** bei der Verfestigung der Wabenstruktur (1) die Zufuhr und der Entzug von Wärme mittels eines durch das Werkzeugunterteil (3), das Werkzeugoberteil (5) und/oder die Kerne (4) des Werkzeugs strömenden Fluids erfolgt.

## Claims

1. Method for producing a honeycomb structure (1) from a semifinished fibre product, preferably carbon fibres, wherein multiple blocks (6, 8) consisting of a honeycomb structure are connected to form the honeycomb structure (1), **characterized in that** a first block (6) is placed (9) into a lower mould part (3) and cores (4) are arranged (10) on the surface (7) of the first block (6) that is opposite from the lower mould part (3), subsequently a layer (2) of semifinished fibre product is placed (11) onto the surface (7) and the cores (4) flush with the contour, after that further cores (4) are arranged (12) on the layer (2), then a further block (8) is placed (13) onto the layer (2) and the cores (4) last arranged, an upper mould part (5) is arranged (14) on the further block and, finally, the layer (2) is consolidated (15) by supplying heat and pressure and the individual blocks (6, 8) are connected to the layer (2) of the semifinished fibre product, the semifinished fibre product of the blocks (6, 8) and of the layer (2) being finished with a thermosetting material as a matrix before or after placement (11).

2. Method according to Claim 1, **characterized in that** the consolidation (15) of the honeycomb structure (1), in particular the honeycomb blocks (6, 8), is carried out in one or more stages.

3. Method according to Claim 2, **characterized in that**, in the case of single-stage consolidation (15), the honeycomb structure (1) is heated (16) over a period of time to a temperature of 160 to 220°C and is subsequently cooled (17) and demoulded (18).

4. Method according to Claim 3, **characterized in that**, in the case of multi-stage consolidation (15), the honeycomb structure (1) is heated (19) over a first period of time to a temperature of 80 to 85°C, then is cooled (17) and demoulded (18) and is subsequently heated (16) over a second period of time to a temperature of 160 to 220°C and, finally, is once again cooled (17).

5. Method according to at least one of the preceding claims, **characterized in that** the consolidation (15) of a honeycomb structure (1) consisting of multiple blocks (6, 8) is carried out in multiple stages.

6. Method according to Claim 5, **characterized in that**, in the case of multi-stage consolidation (15), the honeycomb structure (1) is heated (19) over a first period of time to a temperature of 80 to 85°C and a pressure (19), then is cooled (17) and demoulded (18) and is subsequently heated (16) over a second period of time to a temperature of 160 to 220°C and, finally, is once again cooled (17).

7. Method according to at least one of the preceding claims, **characterized in that** the same semifinished fibre product and the same matrix material are used for the blocks (6, 8) and the layer (2).

8. Method according to at least one of the preceding claims, **characterized in that** in the consolidation of the honeycomb structure (1) the supply and removal of heat is performed by means of a fluid flowing through the lower mould part (3), the upper mould part (5) and/or the cores (4) of the mould.

## Revendications

1. Procédé de fabrication d'une structure en nid d'abeille (1) à partir d'un demi-produit en fibres, de préférence en fibres de carbone, dans lequel on assemble plusieurs blocs (6, 8) composés d'une structure en nid d'abeille pour former la structure en nid d'abeille (1), **caractérisé en ce que** l'on dépose (9) un premier bloc (6) dans une partie inférieure d'outil (3) et on dispose (10) des noyaux (4) sur la surface (7) du premier bloc (6) opposée à la partie inférieure d'outil (3), ensuite on dépose (11) une couche (2) de demi-produit sur la surface (7) et les noyaux (4) en épousant le contour, puis on dispose (12) d'autres noyaux (4) sur la couche (2), et on dépose (13) ensuite sur la couche (2) et les noyaux (4) disposés en dernier lieu un autre bloc (8), sur lequel on dispose (14) une partie supérieure d'outil (5), et on consolide ensuite (15) la couche (2) par application de chaleur et de pression et on assemble les blocs individuels (6, 8) avec la couche (2) du demi-produit en fibres, dans lequel on munit le demi-produit en fibres des blocs (6, 8) et de la couche (2) d'une matière thermodurcissable comme matrice avant ou après le dépôt (11).

2. Procédé selon la revendication 1, **caractérisé en ce que** l'on effectue la consolidation (15) de la structure en nid d'abeille (1), en particulier des blocs de nid d'abeille (6, 8), en une étape ou en plusieurs étapes.

3. Procédé selon la revendication 2, **caractérisé en ce que**, dans le cas d'une consolidation (15) en une étape, on soumet (16) la structure en nid d'abeille (1) à une température de 160 à 220°C pendant un laps de temps, puis on la refroidit (17) et on la démoule (18).

4. Procédé selon la revendication 3, **caractérisé en ce que**, dans le cas d'une consolidation (15) en plusieurs étapes, on soumet (19) la structure en nid d'abeille (1) à une température de 80 à 85°C pendant un premier laps de temps, puis on la refroidit (17) et on la démoule (18), et ensuite on la soumet (16) à une température de 160 à 220°C pendant un deuxième laps de temps et finalement on la refroidit de nouveau (17).

5. Procédé selon au moins une des revendications précédentes, **caractérisé en ce que** l'on effectue en plusieurs étapes la consolidation (15) d'une structure en nid d'abeille (1) composée de plusieurs blocs (6, 8) .

6. Procédé selon la revendication 5, **caractérisé en ce que**, dans le cas d'une consolidation (15) en plusieurs étapes, on soumet (19) la structure en nid d'abeille (1) à une température de 80 à 85°C ainsi qu'à une pression pendant un premier laps de temps, puis on la refroidit (17) et on la démoule (18), et ensuite on la soumet (16) à une température de 160 à 220°C pendant un deuxième laps de temps et finalement on la refroidit de nouveau (17).

7. Procédé selon au moins une des revendications précédentes, **caractérisé en ce que** l'on utilise pour les blocs (6, 8) et la couche (2) le même demi-produit en fibres et le même matériau de matrice.

8. Procédé selon au moins une des revendications précédentes, **caractérisé en ce que**, lors de la consolidation de la structure en nid d'abeille (1), on opère l'application et l'extraction de chaleur au moyen d'un fluide circulant à travers la partie inférieure d'outil (3), la partie supérieure d'outil (5) et/ou les noyaux (4) de l'outil.
